Europäisches Patentamt

European Patent Office

Office européen des brevets

(11) Publication number: **0 336 594**
**A2**

## EUROPEAN PATENT APPLICATION

(21) Application number: **89302690.6**

(22) Date of filing: **17.03.89**

(51) Int. Cl.⁴: **H04N 17/00**

(30) Priority: **25.03.88 US 173394**
**09.06.88 US 204606**

(43) Date of publication of application:
**11.10.89 Bulletin 89/41**

(84) Designated Contracting States:
**AT BE CH DE ES FR GB GR IT LI LU NL SE**

(71) Applicant: MAGNI SYSTEMS, INC.
9500 South West Gemini Drive
Beaverton Oregon 97005(US)

(72) Inventor: **Allelyunas, Carl Harry**
**14230 South West Domino Street**
**Beaverton Oregon 97005(US)**
Inventor: **Judge, John Larry**
**960 North East Birchwood Drive**
**Hillsboro Oregon 97124(US)**
Inventor: **Kiyoi, Edward Alan**
**7493 South West 184th Place**
**Aloha Oregon 97007(US)**
Inventor: **Wendt, Mark**
**9365 South West 146th Terrace, No. 8**
**Beaverton Oregon 97007(US)**

(74) Representative: **Cross, Rupert Edward Blount**
**et al**
**BOULT, WADE & TENNANT 27 Furnival Street**
**London EC4A 1PQ(GB)**

(54) Video monitor.

(57) A waveform video monitor and vectorscope provides microprocessor control of a front panel display and, in one embodiment, includes six video inputs for complete composite and component testing. The monitor also includes electronic character generation capability. The microprocessor controls switching between two or more modes of operation and the display is blanked between switching.

EP 0 336 594 A2

# VIDEO MONITOR

## Background of the Invention

The present invention relates to waveform monitors and vectorscopes and corresponding methods for use in waveform and vector monitoring, such as utilized with composite and component television systems.

Previous waveform monitors and vectorscopes have used a microprocessor controlled front panel. This yielded the obvious benefits of storing certain front panel states to memory for later recall, simultaneous switching of more than one function or feature, or preventing the operator from accessing certain front panel combinations that, while possible from a strictly mechanical point of view, have little or no meaning to the useful operation of the instrument.

As also is known, previous waveform monitors and vectorscopes contained two, or at most three, video inputs. These prior art monitors and vectorscopes were designed primarily for composite video monitoring or very limited component video monitoring.

As is also known in the prior art, previous waveform monitors, vectorscopes and oscilloscopes contained electronic readout capability for printing certain instrument status on the CRT display. Some of these instruments also included one or more sets of electronically generated cursors which aided in making relative amplitude and/or timing measurements.

## Summary of the Invention

Embodiments of the present invention provide a video monitor which utilizes microprocessor control to dynamically control the state of the monitor which can include a waveform monitor, vectorscope or video monitor.

Further, there is provided a waveform monitor, vectorscope or other video monitor which has sufficient input capability for component video applications. The six video inputs to the monitor are arranged as two groups of three channels each, making monitoring of two complete component video signals feasible. Previous monitors designed for component video applications contained only three video inputs. In addition, the present invention incorporates measurement modes and features for both composite and component video applications.

There is also provided an electronic character generator for a waveform monitor, vectorscope or other video monitor which is capable of displaying readouts, measurement cursors, or graticules on a cathode ray tube (CRT) display. The features and capabilities of the electronic character generator are designed specifically for video systems and their related measurements. These features facilitate many familiar operator measurements, as well as provide measurement capability that would otherwise be difficult.

According to one embodiment of the present invention, a controller can be used to rapidly switch between two or more predetermined front panel states blanking the transitional instability, making feasible certain displays and/or features that would otherwise require specialized hardware.

According to another preferred embodiment of the present invention, the waveform monitor contains six video inputs arranged as two input groups of three channels each. This allows monitoring of two complete three-channel component video signals, six composite video signals, or a combination of both. The format of the signals of the two input groups can be predetermined by the operator, such that all measurement modes and/or features that are format dependent are automatically switched as the inputs are selected.

Examples of the invention will now be described.

Fig. 1A depicts the serial interface control between two or more video monitors.

Fig. 1B depicts a video monitor having microprocessor control according to the present invention.

Fig. 1C depicts a block diagram of a VMAG parade configuration.

Fig. 2A depicts a block diagram of a video monitor input sub-system having six inputs.

Fig. 2B depicts the effect of format switching on the video monitor.

Fig. 2C depicts the effect of format switching on the component vector display of a video monitor.

· Fig. 3 depicts the preferred embodiment of the component video line selector.

Fig. 4 depicts an alternative embodiment of the component video line selector.

Fig. 5 depicts a diagram of electronic character generation circuitry according to the present invention.

## Serial Interface Control

For purposes of simplification, the embodiment of the present invention will be described in terms of a video monitor. However, the present invention is intended to cover applications for any video display device, such as a video monitor, videoscope and the like.

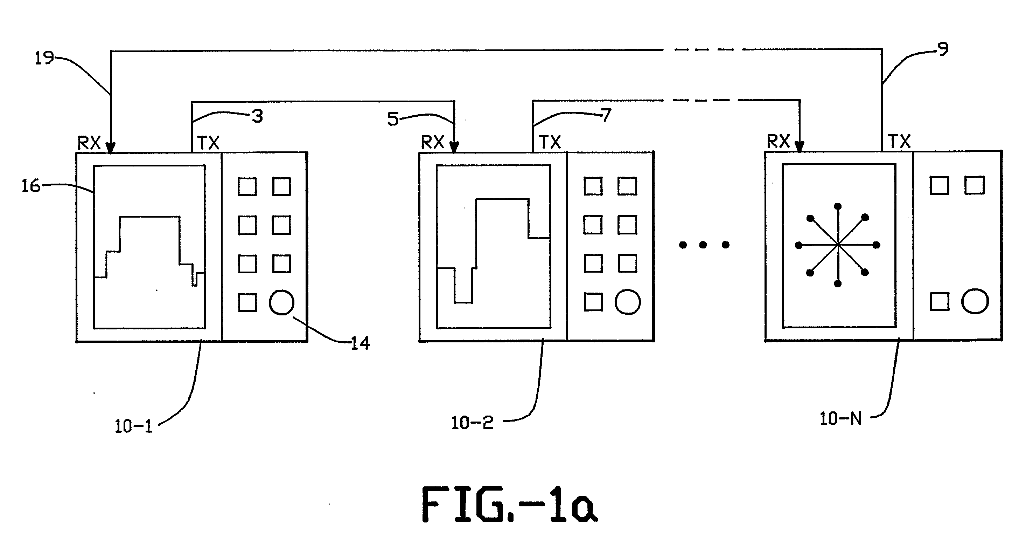

Fig. 1A is a diagram showing how two or more video monitors 10-1,..,10-N, including a microprocessor, may be interconnected using a serial interface. The interface allows any monitor in the series to control the common features of all other monitors in the series (i.e., input switching, or recalling of a predetermined front panel state).

The transmit output of the first monitor 3 is connected to the receive input of the second monitor 5. The second monitor transmit 7 is connected to the receive input of the third monitor, and so forth, until the final monitor in the series 10-N, where the transmit output 9 is connected to the receive input of the first monitor 19. This makes a complete control path from any one monitor to any other monitor.

All information received by one monitor is passed on to the next in the series. Only commands which are implementable by the receiving monitor are acted upon by that monitor. Any monitor in the series may initiate a change of state for all other monitors in the series.

Range Offset Under Microprocessor Control

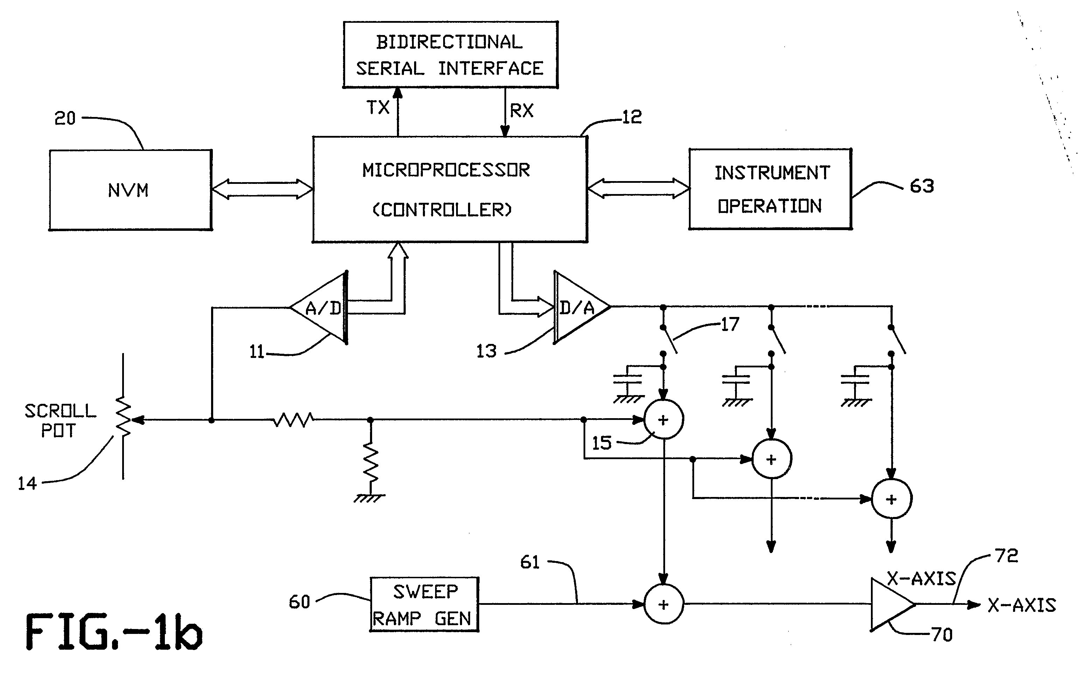

Fig. 1B is a diagram showing how a single turn scroll pot 14 is used with a microprocessor system 12 to scroll a given signal 61 over a large displacement range with high resolution.

The scroll pot alone changes the signal offset over a small fraction of the required range. The microprocessor, by way of an analog to digital converter (ADC) 11, determines that the scroll pot is nearing its end of rotation and supplies an offset voltage through a digital to analog converter (DAC) 13 to be summed at 15 with the scroll pot voltage thereby scrolling or repositioning the signal at 72. The rate of scroll and the amount of scroll can be set by the rate at which the scroll pot was changed prior to reaching its extreme.

Additional offsets may be applied to other signals by way of switching the DAC outputs in synchronism with a sample-and-hold 17 whose output is summed with the scroll pot. The scroll pot may be replaced by any other control means. This circuit is not limited to vertical and horizontal positioning of a displayed signal on a CRT. It has applications for changing any signal through a large number of states with a single turn pot or any other control means.

Microprocessor Controller

The microprocessor is used to control the instrument operation 63, one operation of which is blanking. Rapid switching, under microprocessor control, between two or more instrument modes separated by a period of blanking of sufficient duration to allow all instrument states to settle to their final values, allows but is not limited to the following implementations:

Alternating Blanking Modes

Microprocessor (controller) 12 is used to switch both the displayed video input and the reference signal at a rapid rate, causing the two video signals to appear to be overlaid in time on the display. This allows overlaying two non-timed yet synchronous video signals such that any timing offset between them is eliminated on the display, or overlaying two non-synchronous video signals such that both waveforms are simultaneously displayed in a stable manner. The video signals selected can be any two channels within the same input group.

The controller 12 is used to switch between like channels of the two input groups at a rapid rate, causing the two video signals to be overlaid on the display. The two video signals can be displayed in waveform monitor mode or component vector display mode. As the input groups are switched, the predetermined formats of the two inputs are also switched, enabling comparison of two signals of differing format. In addition, the two signals can be non-timed and/or non-synchronous yet be displayed in a stable manner.

The controller can be used to switch between any combination of two or more video input channels such that all selected channels are overlaid on the display. In addition, the controller can be used to switch between a three-channel sequential display of the first input group and a three-channel sequential display of the second input group. This would allow the operator to overlay two complete three-channel component video signals on the display.

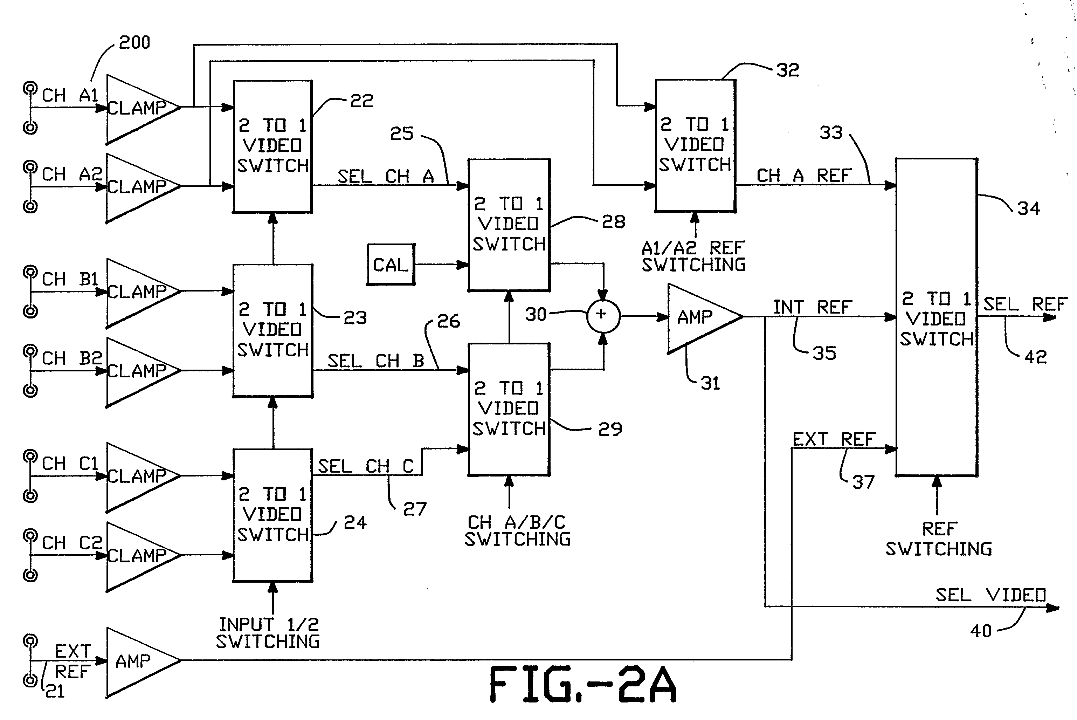

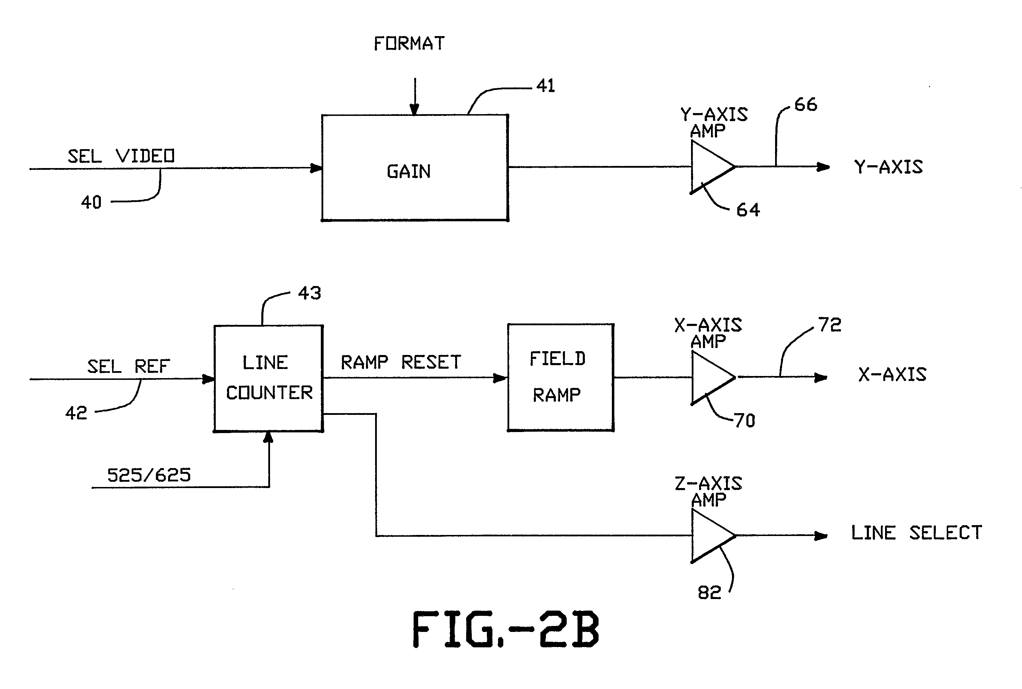

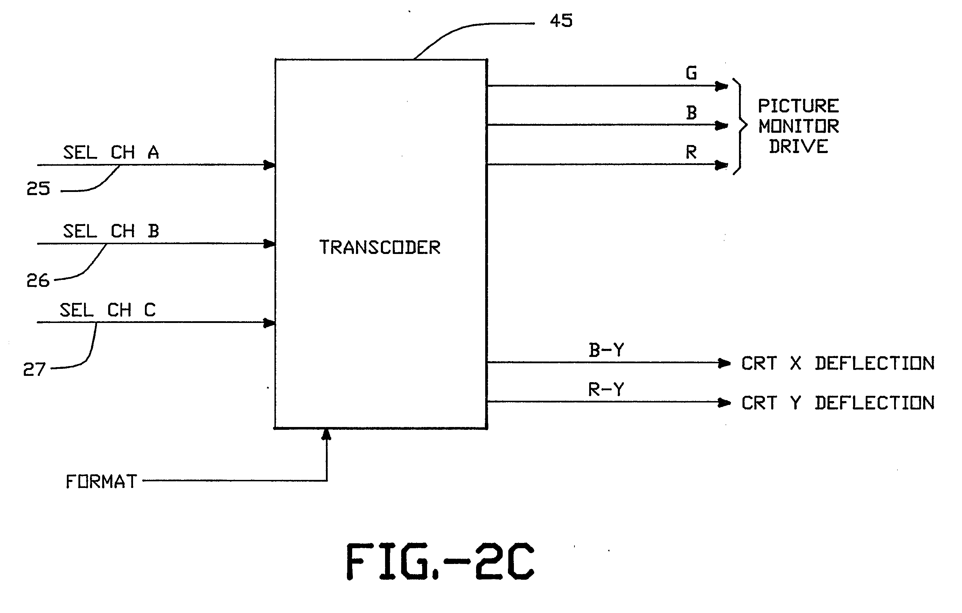

The controller is used to switch between the A1 (usually a master reference signal) input of Fig. 2 and any one of the remaining five inputs such that the two video signals are overlaid on the display.

The controller is used to switch between pairs of filters (e.g., Flat/LPF, LPF/CHRM, LPF/DIF'D) such that the two signal waveforms are overlaid on the display. This allows simultaneous viewing of different components of the video signal.

The controller is used to switch the horizontal sweep magnifier on and off such that both the magnified and unmagnified waveforms are overlaid on the display. This allows simultaneous viewing of the horizontal blanking interval and the full line of video.

For component input signals, the controller is used to switch between one or more waveforms (amplitude vs. time) and a component vector (transcoded R-Y vs. B-Y) display such that both are overlaid on the display.

The controller is used to toggle the variable gain function at a rate which causes one or more of a group of simultaneously overlaid signals to have their vertical gain adjusted independently of the other signals which are simultaneously being overlaid.

The controller is used to toggle the variable phase function at a rate which will allow one or more of a group of simultaneously overlaid vector displays to have their phase adjusted independently of the other signals which are simultaneously being overlaid.

Parade Blanking Modes

The controller is used to switch between two instrument states in which either the left or right half of the two-line sweep is blanked on the display. This allows sequential (rather than overlaid) displays of two different instrument states or front panel settings. The Parade blanking may be extended to three instrument states by blanking left, center, or right sections of a three line sweep.

A most useful consequence of the Parade Blanking capability is a sequential display of a single selected line and the full-field signal. This allows simultaneous VITs and full-field signal monitoring.

Parade blanking can be used to present sequential displays of any or more two input channels. This allows an operator to monitor any two or more signals without being limited by the input switching hardware.

Parade blanking can be used to present sequential displays between two non-synchronous input video signals. Both the input signal and the reference signal to the monitor would be switched enabling both waveforms to be displayed in a stable manner.

VMAG Parade

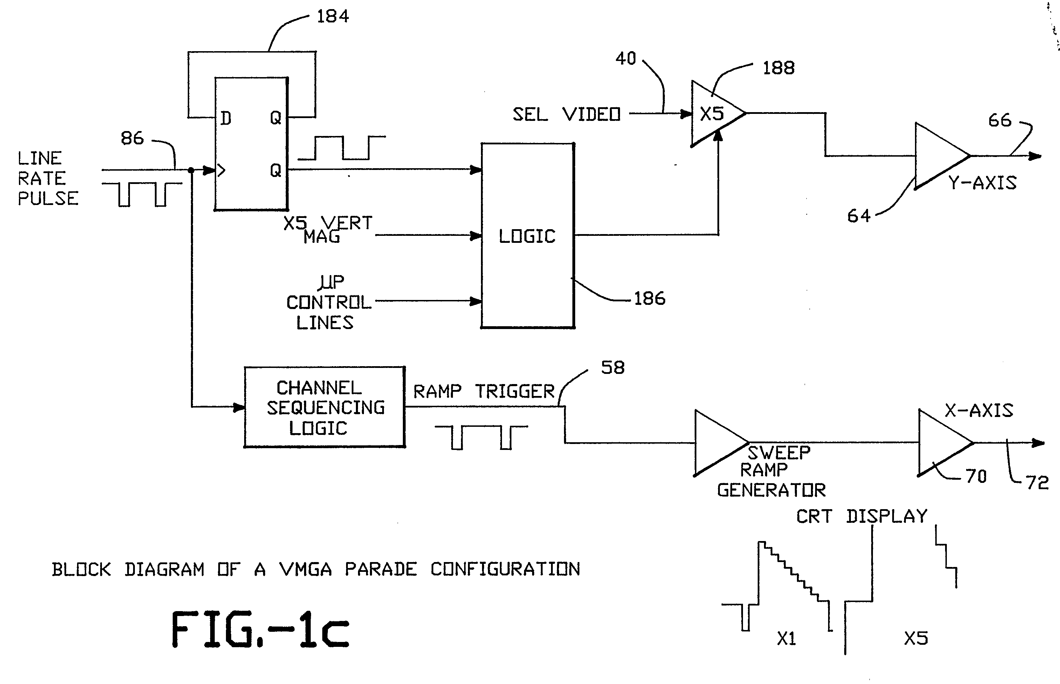

Fig. 1C is a block diagram showing the preferred embodiment of the invention. Horizontal line rate pulses 86 synchronous with the selected video 40 are fed into the clock input of a flip-flop 184. The output of the flip-flop changes state every horizontal line of the selected video 40. The logic block 186 can then be used to switch the vertical 5X gain amplifier 188 on and off synchronous with the selected video. The horizontal line rate pulses 86 are also used to reset the sweep ramp generator 60. This allows the switching of the vertical 5X gain amplifier 188 to occur synchronous with the two line sweep of the video monitor, presenting on the display of the monitor a parade of X1 video with X5 video, called VMAG parade.

This display is most useful in video applications where either the set-up level or its removal must be closely monitored. The X1 video display must be used to verify peak video levels, while the X5 video display is used to monitor the small amplitude (7.5% of peak video) set-up level. An alternative embodiment can be the parade blanking mode to allow the controller to switch between X1 and X5 gain. Also provided is a means suitable for presenting parade displays of other waveform monitor features such as fixed and variable gain, different filters, and non-synchronous inputs.

Channel Memory

Microprocessor 12 of Fig. 1B is used to store, in memory 20, different front panel settings for each video input. This allows the operator to select the particular front panel setting that is most useful for the video signal being applied to the input, and store that setting for later recall. Channel memory 20 is accessed via front panel input select buttons for greater ease of operation. Furthermore, the electronic character generator can be programmed to assign a user defined label to each individual channel.

Six Input Monitor

Fig. 2 depicts the input switching circuitry of a six-input video monitor according to the present invention. Six video inputs (A1, A2, B1, B2, C1, C2) are configured as two input groups of three channels each, for a waveform monitor, vectorscope or other video monitor. This allows monitoring of six composite video signals, two three-channel component video signals, or a combination of composite and component video signals. The six inputs, A1, B1, C1, A2, B2 and C2, are input into 2 to 1 video switches 22, 23, 24. Other input combinations include the display of a component vector of two X and Y inputs and a waveform display of the third input. A combination of component and composite inputs may be displayed as a vector display of two X and Y inputs of a component signal and a vector display of composite signal on the third input.

The monitor contains provisions for changing the deflection factors and video line counters such that different video formats can be displayed. These include but are not limited to 525 lines per frame in composite and component format, and 625 lines per frame in composite and component format.

Fig. 2B depicts the effects of the front panel format switching on the waveform monitor display. The vertical deflection factor is changed slightly by switching a gain block 41. This is to account for the different peak white voltage levels (714mV or 700mV) of the different formats. A video line counter 43 is reset at different counts to correspond to the different line and field rates of video systems throughout the world. These systems employ either 525 lines per frame or 625 lines per frame of video.

Fig. 2C depicts the effects of the front panel format switching on the component vector display and picture monitor outputs. The outputs of the transcoder 45 are fixed, being GBR format for the picture monitor outputs and color difference format for the component vector display. The inputs to the transcoder 45 can be either Green, Blue, Red or any of several color difference formats. The FORMAT switch selects the appropriate matrix within the transcoder to convert color difference inputs to GBR outputs or GBR inputs to color difference outputs.

The format of the video signals on the two input groups can be predetermined and programmed to follow the input switching such that all measurement modes and/or features that are format dependent are automatically switched as the inputs are selected.

The input circuitry of Fig. 2A contains provisions for automatic reference switching as determined by the format of the video input. This eliminates the need for manual switching or the use of a separate external reference video signal. The selected reference signal 42 is selected by video switches 32, 34. These switches are microprocessor controlled, and depend upon the front panel state of the monitor. If the front panel is set for internal reference, the microprocessor will select the INT REF signal 35 for composite formats or the CHA REF signal 33 for component formats. This is due to the fact that component signals carry the sync (reference pulse) on only the primary channel (CHA). The microprocessor will also select CHA REF 33 when multiple inputs are selected for display, regardless of the format. This avoids problems associated with switching the reference signal, especially when the inputs are non-timed. If the front panel is set for external reference, the microprocessor will select the EXT REF signal 37 in all formats.

The input circuitry of Fig. 2A is configured in such a manner to allow for switching between any of the three channels in the same input group 28, 29. The timing for synchronous switching is derived from the selected video reference. This allows monitoring of all three channels of a component analog video signal or the comparisons of three composite video signals. In normal operation, video switches 28, 29 allow only one of SEL CHA 25, SEL CHB 26, or SEL CHC 27 to pass through the amplifier 31 as SEL video 40.

The input circuitry is configured in such a manner to allow for switching between like channels of the two input groups. The video switches 22, 23, 24 are switched in parallel such that the outputs (SEL CHA, SEL CHB, and SEL CHC) are either from Input 1 or Input 2. The outputs of these switches are therefore one complete component video signal or one or more composite signals. The timing for synchronous switching is derived from the selected video reference. This allows comparisons of like channels between two component analog video signals (e.g., Y to Y, B-Y to B-Y, G to G, etc.).

## Full Function Line Select

The video monitor includes a full function video line select feature. The line selector displays multiple channels sequentially with just one line of each channel per field, frame, or every two frames of the video signal. Alternatively, the line selector can display multiple channels overlaid on the CRT with just two lines of each channel per field, frame, or every two frames of the video signal. This allows an operator to monitor a single line (such as a vertical interval test signal) of an entire three-channel component video signal at the same time, or a single line of multiple composite signals.

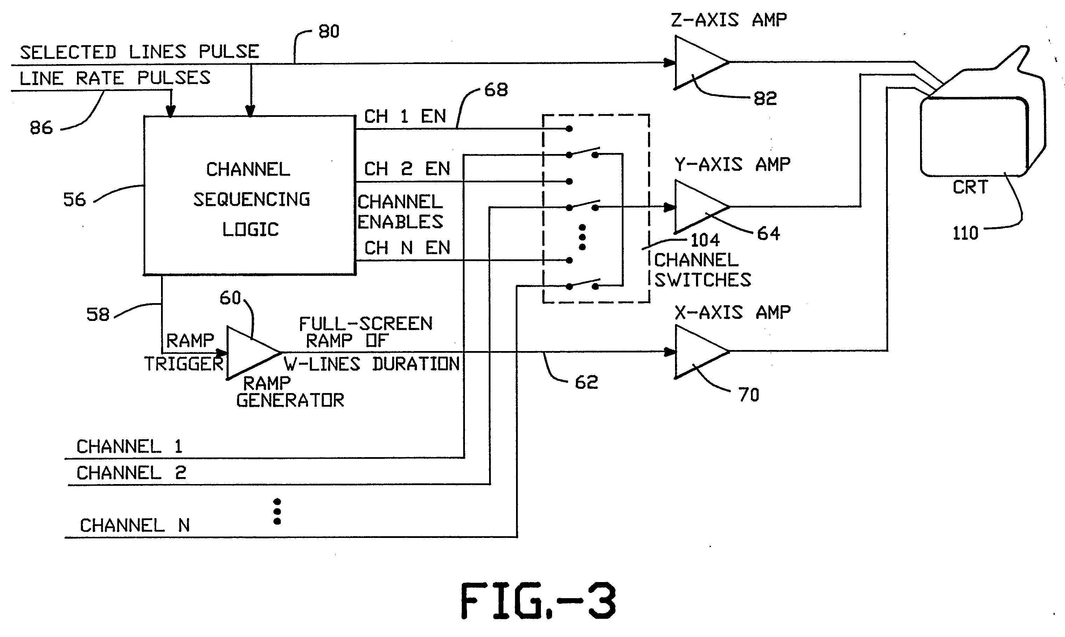

Fig. 3 depicts the preferred embodiment of the component video line selector. The controlling microprocessor issues a selected lines pulse 80 synchronous with the selected lines of video and of a duration equal to the number of lines to be displayed out of the field or frame of video. This pulse is sent to the Z axis (intensity) of the CRT through the Z axis amplifier 82, allowing only those selected lines of video to be seen. Also, during the selected lines pulse 80 and synchronous with the video line rate, the line rate pulses 86 sequence the channel sequencing logic 56 so that:

A. A ramp trigger pulse 58 occurs of short duration with respect to the line rate, which triggers the full-screen ramp of N-lines duration 62 from the triggerable ramp generator 60 to sweep the beam of the CRT 110 through one complete scan from left to right, through the X-axis amplifier 70.

B. The channels are switched by the channel switches 104 in order, under control of the channel enable lines 68 so that in the Mth position on the screen, left to right, only channel M can be seen, if and only if the selected lines pulse 80 is active at the time. The switched channels are sent through the Y-axis amp 64 to cause a vertical deflection only of the channel whose enable line is active.

C. The trailing edge of the selected lines pulse 80 changes the sequence of channel enables 68 with respect to the ramp trigger 58 so that on the next field or frame a different sequence is possible. For example, if only one line is selected by the selected line pulse 80, as fields or frames of video are sequenced, a different channel of the same line number is displayed. An inherent advantage of this method is that if all lines are selected, the channel sequencing logic 56 will display, in horizontal sequence, each channel with all lines of all fields, with no additional hardware, assuming the field or frame in the video standard has a number of scan lines not integer divisible by N.

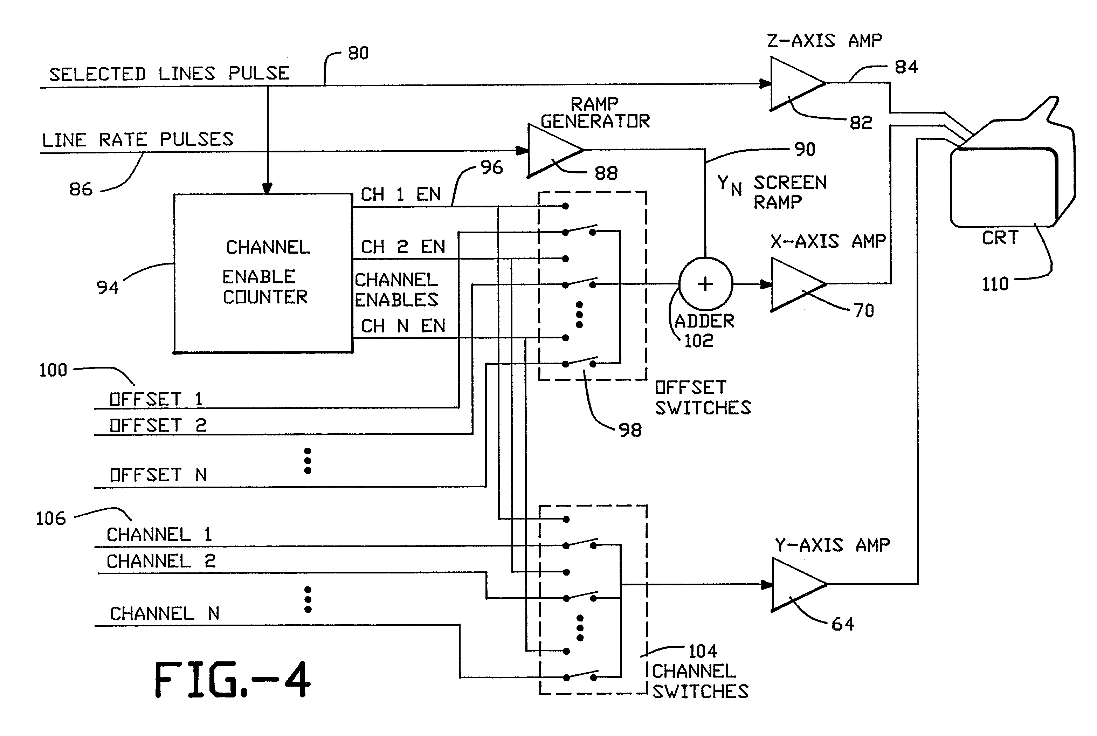

Fig. 4 depicts an alternative embodiment of the component video line selector. The controlling microprocessor issues a selected lines pulse 80 synchronous with and whose duration is equal to the number of lines desired to be displayed on the CRT 110 of the field or frame of video. This pulse is sent to the Z-axis amplifier 82 allowing only those lines selected by the selected lines pulse 80 to be displayed.

A line rate pulse 86, synchronous with the line rate of incoming video, but of much shorter duration, triggers the 1/N screen ramp generator 88 to create a ramp 90 of size equivalent to 1/N times the width of the CRT, after amplification by the X-axis amp 70.

The selected lines pulse also clocks the channel enable counter 94 which turns on the channel enables 96 in sequence, so that:

A. The offset switches 98 close in sequence, adding offset voltages 100 proportional to M-1/N of a screen width of the CRT 110 through the adder 102 to the 1/N ramp 90, for channel #M.

B. The channel switches 104 close in sequence as well, so that the Y-axis of the CRT 110 responds to only one of the inputs 106, amplified by the Y-axis amp 64.

An observer of the CRT would see only the selected lines of each channel of the field or frame in the left-to-right channel sequential manner.

Character/Cursor Generator

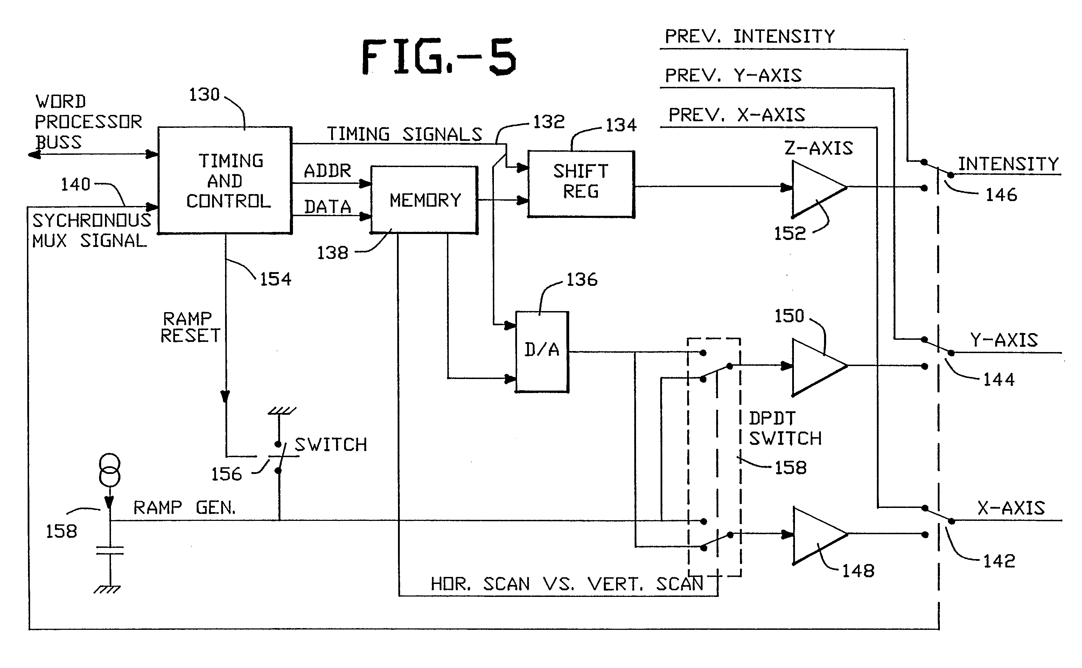

Fig. 5 depicts a diagram of electronic character generation on a video waveform monitor. The timing and control section 130 generates timing signals 132 for the shift register 134 and the digital-to-analog converter 136, as well as generating sequential addresses for the memory 138. The timing and control section also allows microprocessor access to the memory 138 through the microprocessor bus.

A multiplexing signal 140 becomes active synchronously with the incoming video signal and lasts for an integer number of lines. The duty cycle is chosen to allow adequate refresh of the electronically generated characters, as well as allowing previous X, Y and Z axis control of the CRT to be disrupted as little as possible.

Upon the synchronous multiplexing signal 140 becoming valid, the X, Y and Z axis switches 142, 144, 146 are put in the position where the X, Y and Z axis readout amps 148, 150, 152 are active. At the same time, and lasting for a fixed number of readout scans, sequential addresses are presented to the memory 138. At certain intervals, a ramp reset pulse 154 resets the ramp generator 158 by closing the ramp reset switch 156 for a short period of time, triggering a readout scan.

By alternating addresses, the memory presents data to the D/A 136, and then to the shift register 134. The data to the D/A is converted to a Y-axis voltage, assuming DPDT switch 158 is thrown so that the output of the D/A 136 is connected to the Y-axis amp 150. The control, of the DPDT switch is contained in memory as well, so that it may be changed at any other address boundary given by the address sequence.

This, in effect, creates the ability to scan either horizontally or vertically under microprocessor control, at a character boundary. At alternate addresses, the memory 138 presents data to the shift register 134 to create a time- sequential pattern of ones and zeroes, which are amplified by the Z-axis amp 152 to creat light spots on the CRT. Several sequential readout lines, each with sequentially increasing D/A 136 output voltages, create spot patterns in the shape of alphanumeric characters.

After a predetermined number of readout scan lines, the timing and control section 130 stops address sequencing, closes the ramp reset switch 156, and waits for the synchronous multiplexing signal 140 to go inactive, then active again.

Storing the spot pattern, position and direction of scan in the same memory 138 and using a D/A 136 to determine the scan position allows that:

1. A scan line may be generated at any position or direction under microprocessor control.

2. Sequential scans need not be in sequential positions on the CRT.

3. Sequential scans may be interrupted to be synchronous with incoming signals. Previous art interrupted the incoming signals asynchronously.

This method is used to implement the following features:

A set of vertical electronic cursors on a waveform monitor display which consists of two horizontal lines whose vertical positions are independently adjustable. An electronic readout on the display continuously indicates the vertical separation of the two cursors in units of IREs, volts or percent of a presettable amplitude. The readout tracks both the format of the input video signal as well as the vertical magnification factor of the monitor.

A set of horizontal electronic cursors on a waveform monitor display which consists of two vertical lines whose horizontal position are independently adjustable. An electronic readout on the display continuously indicates the horizontal separation of the two cursors in units of time or cycles of subcarrier. The readout automatically tracks the horizontal magnification factor of the monitor, and the cycles of subcarrier automatically switch between a 280 nsec period (3.58 MHz) for the NTSC standard and a 226 nsec period (4.43 MHz) for the PAL standard.

A set of fixed vertical cursors that automatically appear at fixed 10% and 90% points of a presettable 100% amplitude and a set of adjustable horizontal cursors. An electronic readout on the display continuously indicates the horizontal separation of the two cursors in seconds or cycles of subcarrier. This greatly simplifies risetime measurements on a waveform monitor.

A set of electronic cursors on a vectorscope which consists of a vertical and horizontal line whose positions are independently adjustable. An electronic readout on the display continuously indicates the intersection of the two cursors in magnitude and degrees from center or B-Y and R-Y amplitude from center. The readout automatically tracks the format of the incoming video signal.

An electronic readout which continuously indicates the variable gain setting of the monitor in volts-full-scale (VFS). This allows an operator to measure gain errors of the incoming video signal by adjusting the variable gain control for a normal display. The readout will then indicate the amplitude of the video signal.

An electronic readout which indicates if the displayed component signal contains voltage levels which cause any of the three primary components of Green, Blue or Red to exceed their allowable range. This is most useful when the incoming video signal is in color difference format (Y, B-Y, R-Y), since the operator would otherwise need to separately transcode the signal to GBR format and measure the voltage levels of the Green, Blue and Red signals. The readout is also multiplexed with the component line select function of the monitor to facilitate locating of the error within the full field.

An electronic readout which continuously indicates the variable phase setting of the vectorscope. This allows an operator to measure phase differences between two or more input video signals.

An electronic readout which continuously indicates the sub-carrier-to-horizontal phase (SC-H Phase) of the incoming video signal in degrees, along with an analog representation in which both the horizontal width and vertical position of the indicator is proportional to SC-H Phase.

A set of electronic cursors on a waveform monitor display which can be used to directly measure the differential gain (dg) or differential phase (dp) of a suitable video test signal.

An electronic readout which indicates format and the correct scale factors of a multi-standard CRT graticule consistent with the format of the displayed video signal.

The indicator consists of a small arrow or pointer which is generated as an arrow character with the electronic readout. Hence, there is provided a means to indicate the appropriate scale for the selected video format on a multi-standard CRT graticule.

Phase and Gain Cursors for an X-Y Display

Two synchronous sine waves are displayed on the X and Y axes of a CRT, forming a lissajous pattern. The phase/timing and gain difference between two synchronous signals are then displayed such that two signals which are in phase and of the same amplitude will display a straight line at a 45 degree angle which extends from the bottom left portion of the display to the upper right portion of the display. Other phase/timing and gain relationships between the two signals will cause the longitudinal cross section of the displayed lissajous to increase becoming a circle when the amplitude of the two signals are equal and the phase/timing difference is exactly 90 degrees.

The measurement method employs a set of vertical electronic cursors consisting of two vertical lines whose horizontal position is adjustable to overlay the leftmost and rightmost portion of the displayed signals. Phase and timing differences are measured and read out on the display by causing a second set of vertical cursors to overlay the horizontal center line crossing of the displayed signal. Gain ratio is measured and read out on the display by adjusting a set of horizontal cursors consisting of two horizontal lines which are adjusted to overlay the topmost and bottommost portion of the signal.

## Claims

1. A controller for controlling a waveform monitor comprising
a waveform monitor having a front panel display,
microprocessor means for controlling the switching between two or more modes of operation, and
means for blanking the display between the switching of said two or more modes of operation.

2. A controller as in Claim 1 wherein said means for blanking include parade blanking.

3. A controller as in Claim 1 wherein said means for blanking include alternate blanking.

4. A controller as in Claim 1 wherein said processor means includes means for alternating or parading input video signals wherein the displayed signals can be of different formats, non-synchronous and/or non-timed, yet be displayed in a stable manner.

5. A controller as in Claim 1 including means for displaying video signals in a waveform monitor mode and a component vector display mode such that both are overlaid on the display.

6. A controller as in Claim 1 wherein said processor means includes means for switching between two or more video input channels such that all selected channels including non-synchronous inputs are overlaid in time on the display.

7. A controller as in Claim 6 wherein said processor means includes means for overlaying two sets of three video signals each, such as two complete three-channel component video signals on the display.

8. A controller as in Claim 1 wherein said processor means includes means for switching between a master reference signal and any other input signals such that the two video signals are overlaid on the display.

9. A controller as in Claim 1 including a pair of filters and means for switching between said pair of filters to allow for simultaneous viewing of different components of the video signal.

10. A controller as in Claim 1 including a horizontal sweep magnifier and means for switching said magnifier on and off to allow simultaneous viewing of the horizontal blanking interval and a full line of video.

11. A controller as in Claim 1 wherein said processor means includes means for switching between two states on said display in which either the left or the right half of the two line sweep is blanked on the display to thereby allow sequential displays.

12. A controller as in Claim 1 wherein said processor means includes a mean for displaying on one part of the sweep as a selectable line within the video field and display the full field signal on another part of the sweep to display a parade of VITs and full field.

13. A controller as in Claim 1 wherein said processor means includes memory means for storing different front panel settings for each video input to allow an operator to select a presettable front panel setting for each input.

14. A controller as in Claim 1 wherein said processor means includes means so as to cause the displayed waveform to scroll across the screen of said monitor, and means for setting the rate of the scroll.

15. A video test equipment control system comprising
two or more video test instruments, each of said instruments interconnected by a serial interface, such that a complete control path is made from any one instrument and wherein each instrument includes means for initiating a change of state for all other instruments in the series.

16. A multi-input video monitor comprising
a video monitor having six inputs arranged as two groups of three channels each, and
means for monitoring six composite video signals, two three-channel component video signals, or a combination of composite and component video signals.

17. The monitor as in Claim 16 including means for the format of the video signals to be predetermined and programmed to follow the input switching such that all measurement functions that are format dependent are automatically switched as the inputs are selected.

18. The monitor as in Claim 16 including means for automatic reference switching of said video signals depending on the format of the video input.

19. An electronic character generator for a video monitor comprising
means for generating a vertical or horizontal scan line at any line position on said monitor, and
means for interrupting sequential scans so as to be synchronous with incoming signals.

20. A generator as in Claim 19 including means for automatically generating a set of fixed vertical cursors at 10% and 90% points of a presettable amplitude, and a set of adjustable horizontal cursors.

21. A generator as in Claim 19 including an electronic readout for continuously indicating the variable phase setting of said monitor.

22. A generator as in Claim 19 including an electronic readout for continuously indicating the variable gain setting of said monitor.

23. A generator as in Claim 19 including an electronic readout for continuously indicating the subcarrier to horizontal phase of the incoming video signal in degrees along with an analog representation in which both the horizontal width and vertical position is proportional to the SC-H phase.

24. A generator as in Claim 19 including an electronic readout of over-range of the Green, Blue or Red component of a signal with the detection being settable to be full field or a selectable line.

25. A monitor as in Claim 16 including a means for displaying a parade of VITs of the same line in the field of a component signal with three inputs and therefore three VIT signals.

# FIG.-1a

EP 0 336 594 A2

FIG.-1b

EP 0 336 594 A2

BLOCK DIAGRAM OF A VMGA PARADE CONFIGURATION

# FIG.-1c

EP 0 336 594 A2

FIG.-2A

EP 0 336 594 A2

EP 0 336 594 A2

FORMAT

SEL VIDEO
40

GAIN
41

Y-AXIS
AMP
66

64

Y-AXIS

SEL REF
42

LINE
COUNTER
43

525/625

RAMP RESET

FIELD

RAMP

X-AXIS
AMP
72

70

X-AXIS

Z-AXIS
AMP

82

LINE SELECT

# FIG.-2B

FIG.-2C

EP 0 336 594 A2

FIG.-3

EP 0 336 594 A2

FIG.-4

EP 0 336 594 A2

FIG.-5

EP 0 336 594 A2